# EUROPEAN PATENT SPECIFICATION

(11) **EP 2 082 987 B1**
(45) Date of publication and mention of the grant of the patent: **25.07.2012**
(21) Application number: 09388001.1
(22) Date of filing: 23.01.2009
(51) Int. Cl.: B67C 3/24, B67C 7/00, B29C 49/00, B67D 1/08

(54) **A method of producing a beverage container**
Verfahren zur Herstellung eines Getränkebehälters
Procédé de production d'un récipient pour boissons

(30) Priority: 25.01.2008 EP 08388004
(43) Date of publication of application: 29.07.2009
(73) Proprietor: Carlsberg Breweries A/S, 1760 Copenhagen V (DK)
(72) Inventor: Rasmussen, Jan Nørrager, 3650 Øllstykke (DK); Vesborg, Steen, 2820 Gentofte (DK)
(74) Representative: Nielsen, Henrik Sten

(56) References cited:
- EP-A- 0 893 396
- WO-A-99/11563
- WO-A-2007/019848
- DE-A1- 19 928 325
- DE-U1- 20 019 529
- US-A- 5 186 362
- US-A- 5 240 144
- US-A- 5 244 117
- US-A- 5 730 914
- US-A1- 2005 084 635
- US-A1- 2006 204 694

## Description

The present invention relates to a method of a beverage container according to the preamble of claim 1 and as known from US 2006/0204694 A1.

When distributing a large amount of a beverage, such as for use in a beverage dispensing system, normally reusable beverage containers are used. In conventional draught beer systems steel kegs are normally used to transport and store a large quantity of beverage, typically 5 to 10 litres of beverage for private dispensing systems and up to 60 litres for professional dispensing systems. Such steel kegs have a solid structure and are reusable a number of times. However, such steel kegs are rather expensive to manufacture. Additionally they are large and heavy, typically in the range of 20-30 kg when filled and around 10 kg when empty. The size and weight of such kegs also result in high costs for storage and transportation to the customer and back to the beverage producer.

Novel professional and private draught beer systems such as e.g. a DraughtMaster^{™} system provided by the applicant company and described in W02007/019848, W02007/019850, W02007/019851, and W02007/019852 instead uses collapsible and disposable beer kegs made of thermoplastic material. Such beer kegs are much lighter compared to the conventional steel kegs and after use they must not be returned to the producer since they are collapsible and easy to dispose. The beer kegs or beverage containers are preferably disposed in an ecological way, such as by combustion.

The beverage container is produced from a small sized container, a so-called preform. The preforms occupy significantly less space compared to full size beverage containers, thereby lowering the storage and transportation costs. The beverage containers are usually blow-moulded and shortly after filled and capped by a beverage producer. The same device may be used for the blow-moulding and the filling and capping process to avoid a need of storage space for the empty beverage containers. Alternatively, separate machines may be used for the blow-moulding and the filling process. A short period of time should pass between the blow and the filling moulding to allow the beverage container to solidify and cool down.

A preform typically comprises an elongated body and a mouth. The body is extruded to a significantly larger volume during the blow-moulding process. Thereafter the body is filled with beverage. The preform mouth is intended to keep its original shape and remain securely fixed to the blow-moulding system and to the filling system by a flange provided for this purpose on the mouth. US2006/204694A1 concerns a bottle with extended neck finish. To produce the bottle, a preform is blow moulded. The preform has a first collar and an additional collar to be received in the mold.

The flange on the mouth is also used during the dispensing of a beverage for fixating and sealing the mouth of the beverage container to a beverage dispensing system. It has, however, turned out that the flange on the mouth may be dirty, deformed or even broken after the blow-moulding, filling and capping processes. Fitting a corrupted flange into a beverage system will not ensure a proper sealing and may lead to problems such as beverage leaking from the container when the container is installed in the beverage dispensing system. A severely damaged flange may even be impossible to mount in the beverage dispensing system, or the beverage keg may loosen during dispensing

When using plastic kegs, the weight of the keg may still exceed 20 kg when filled. This puts a very high stress on the before mentioned flange, since the flange need not only to support the full weight of the keg, but also need to ensure a secure and leakage free connection between the beverage system and the keg. The blow-moulding and filling processes may introduce cracks, voids, dents or even holes into the flange. Later, the flange may break due to the weight of the filled keg. Such breakage during the installation of the beverage container into the beverage dispensing system or during use will undoubtedly yield an unpleasant result for the consumer.

It would therefore be an advantage to provide a beverage container preform, which is capable of being securely flanged, onto a beverage dispensing system even after the unavoidable degradation of the preform caused by the blow-moulding and filling processes.

It is an object according to the invention to provide a method of producing a beverage container for containing a carbonized beverage.

The above object together with numerous other objects, advantages, and features which will be evident from the below detailed description of the presently preferred embodiments of the beverage container according to a first aspect of the present invention are according to the teachings of the present invention obtained by a method of producing a beverage container according to claim 1.

It has been found that by providing two flanges of substantially identical shape and of which the second flange is to be used exclusively during the blow-moulding, filling and capping of the beverage, and of which the first flange may remain undamaged during the blow-moulding, filling and capping of the beverage, and as a result the undamaged first flange provides a leakage free dispensing of the beverage. The first flange is consequently intended for exclusive use during the dispensing of the beverage and therefore should remain essentially unused and preferably protected during the blow-moulding and filling processes. In this way the first flange may remain intact also when the second flange has been degraded during the blow-moulding, filling and capping processes. The surface of the first flange will thus be smooth and clean thereby provide a good sealing capability and proper mounting and fitting when used in a dispensing system.

Both the first flange used for dispensing and the second flange used for blow-moulding, filling and capping should preferably be located on the beverage container mouth close to the container opening. The flanges may be spaced apart a distance to allow for a holding device in the beverage dispensing system to be able to fixate the beverage container by gripping between the flanges. The flanges may protrude a distance necessary to have the required strength to hold the stress applied to the flanges by the weight of the beverage container.

According to a second aspect not forming part of the present invention, a method is disclosed of filling the beverage container with beverage while mounting said beverage container in a filling system, fixating said beverage container relating to said filling system by means of said second flange without significantly contacting said first flange, filling said beverage container while maintaining said beverage container in said filling system by means of said second flange and preventing mechanically contacting or influencing said first flange.

The filling system may preferably be integrated into the moulding system to reduce the number of steps in the manufacture process and to avoid the need of storing the moulded but unfilled beverage containers prior to filling. Alternatively the filling system may be a stand-alone system suited for filling only. The beverage container is preferably filled by a flexible filling pipe protruding into the beverage container through the mouth of the beverage container.

The filling system should include a holder for gripping the second flange of the beverage container while making sure that the first flange remains clean and undamaged. The second flange of the beverage container should be made strong enough to be able to hold the weight of the beverage container including a substantial amount of beverage.

According to a third aspect not forming part of the present invention, a method is disclosed of capping the beverage container while mounting said beverage container in a capping system, fixating said beverage container relating to said capping system by means of said second flange without significantly contacting said first flange, capping said beverage container by sealing off said beverage container at said mouth by means of a sealing membrane, cap or cork while maintaining said beverage container in said filling system by means of said second flange and preventing mechanically contacting or influencing said first flange.

The cap used for the beverage container may be e.g. a press-on-pull-off cap, a pierceable membrane cap or if a thread is provided on the mouth, a screw cap as well. The capping should be made directly after the filling to avoid any substances from entering or exiting the beverage container. Such substances may be oxygen entering the beverage container and in case of a carbonated beverage carbon dioxide exiting the beverage container.

Preferably, during the blow-moulding, filling and capping processes protective means are applied to protect the first flange. Such protective means may in its simplest realization be the holding device fixating the second flange onto the moulding system simply covering the first flange at an appropriate distance from the first flange.

According to a fourth aspect not forming part of the present invention, a method is disclosed of dispensing a beverage from a beverage container by means of a dispensing device, the beverage container produced in accordance with the method according to any of the claims 1-7, the dispensing device including:
- a holder for fixating the first flange securely onto the dispensing device, leaving the second flange without any significant contact with the holder, alternatively, the holder fixating the first flange in combination with the second flange onto the dispensing device,
- a beverage pipe for allowing the beverage to flow from the inside of the beverage container to the outside of the dispensing device,
- a sealing means for sealing the first flange to the holder the method further comprising the steps of:

- mounting the beverage container in the dispensing device,
- fixating the beverage container to the dispensing device by means of the first flange or alternatively fixating the beverage container to the dispensing device by means of the first flange in combination with the second flange,
- dispensing the beverage while keeping the first flange sealed onto the dispensing device.

Such dispensing devices may range from professional draught beer dispensing systems with integrated cooling and pressurization to cheap and simple dispensing taps without any housing connectable directly onto the beverage keg. Alternatively, such a dispensing device may simply relate to an adapter for using the beverage container together with a draught beverage system.

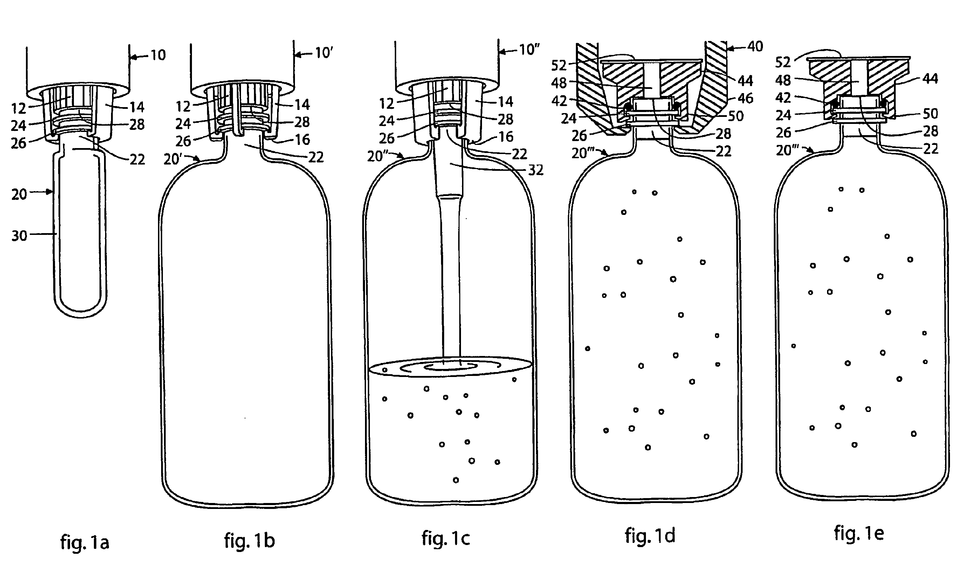

The present invention is now to be further described with reference to the drawings, in which
Fig. 1a is a vertical sectional view of a blow-moulding and filling system comprising a blow-moulding device in a state before the blow-moulding process has been initiated.
Fig. 1b is a vertical sectional view of a blow-moulding and filling system comprising a blow-moulding device in a state after the blow-moulding process is finished.
Fig. 1c is a vertical sectional view of a blow-moulding and filling system comprising a filling device.
Fig. 1d is a vertical sectional view of a capping device.
Fig. 1e is a vertical sectional view of a capped and sealed beverage container.

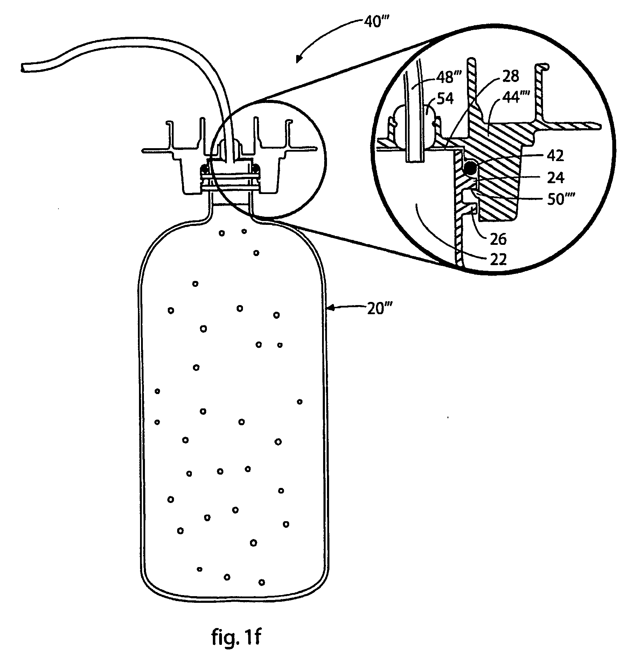

Fig. 1f is vertical sectional view of a beverage container, an adapter and a tapping line for use in a beverage dispensing system such as e.g. a DraughtMaster^{™} system, including a zoomed view of the mouth of the beverage container.

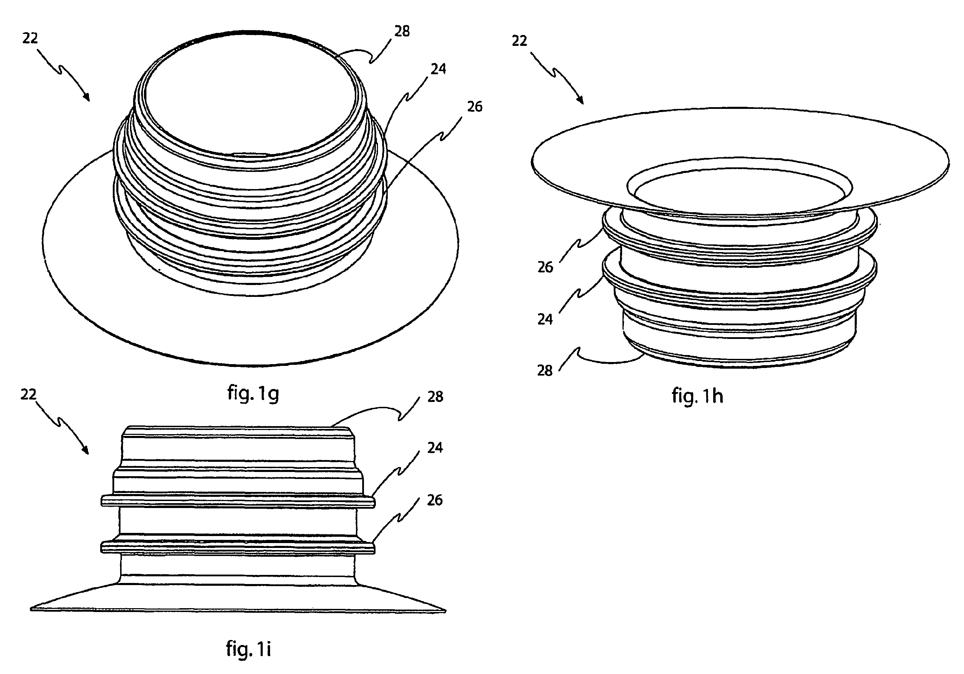

Fig. 1g, 1h, 1i are three different detailed 3D views showing the mouth of the beverage container including the flanges.

In the present context the expressions "upper" and "lower" refer to the orientation shown in the figures.

Below is a detailed description of the figures of a preferred embodiment of the invention.

Fig. 1 a illustrates a vertical sectional view of a blow-moulding system 10 shown in a state before the blow-moulding process has been initiated. The blow-moulding system 10 comprises a pressurizing pipe 12, a holder 14 and a preform 20.

The preform 20 is made of a liquid impervious thermoplastic material which provides good structural qualities and is lightweight. Preferably a laminate encompassing PET (Polyethylene terephthalate) is used. The preform 20 comprises a main body 30 having an elongated cylindrical shape, a closed half-spherical lower end, an open upper end and a wall thickness of approximately 5 mm. The upper end of the preform 20 comprises a mouth 22 forming a protruding cylindrical portion slightly constricted in relation to the main body 30. The mouth 22 ends in a rim 28 juxtaposed the pressurizing pipe 12 forming a pressure tight connection between the rim 28 and the pressurizing pipe 12.

The mouth 22 comprises a perpendicular first flange 24 protruding 4-8 mm and encircling the mouth 22 parallel to the rim 28. The first flange 24 has a width of approximately 2-6 mm and is located at a distance of approximately 5 mm from the rim 28. A second flange 26 with an equal or closely related geometric shape compared to the first flange 24 encircles the mouth parallel to the first flange 24 and at a distance of approximately 5 mm from the first flange 24. The mouth 22 joins the main body of the preform 20 seamlessly at a distance of approximately 5 mm from the second flange 26.

The holder 14 encloses the mouth 22 with a close fit around both the first flange 24 and the second flange 26. The lower end of the holder 14 facing the main body 30 comprises a locking member 16 bending inwards below the second flange 26 forming a close fit to the mouth 22 thereby locking the preform 20 onto the blow-moulding system 10. The locking member 16 applies a static force onto the second flange 26 in an upward direction in such a way that the rim 28 forms a secure and pressure tight connection to the pressure tube 12. The holder 14 comprise at least two vertical sections to allow the preform 20 to be attached or separated from the blow-moulding system 10 by separating the sections of the holder 14. The holder 14 must not necessarily fully encircle the mouth 22 but may include empty sections, provided stability is ensured during moulding and filling.

Fig. 1b illustrates a vertical sectional view of a blow-moulding system 10' in a state after the blow-moulding process is finished. The designated numerals shown in Fig. 1b refer to the same part as in Fig. 1a, a prime (') symbol indicating a different embodiment of the same part.

During the blow-moulding process the preform 20 is blown into a beverage container or container 20' by applying heat from an external heat source (not shown) and by introducing high pressure into the preform 20 though the pressurizing pipe 12. Preferably a radiating heat source is used, such as an IR (infrared) lamp. The heat causes the pre-from 20 to become soft and easily deformable. The first flange 24 is protected from the heat source by the holder 14, thereby ensuring the first flange 24 remaining solid and essentially unaffected by the heat source. The holder 14 may preferably be slightly wider than the first flange 24, alternatively having a slight conical shape allowing for the first flange 24 not to touch the holder 14 at any given time to allow for a small air gap between the holder 14 and the first flange 24 insulating the first flange 24 thermally from the holder 14 since the holder 14 possibly will be hot due to the radiation from the heat source.

The pressure applied from the pressurizing pipe 12 causes the pressure inside of the preform 20 to rise above the ambient pressure outside of the preform 20 thereby acting as a force to expand the preform 20 into the shape of a beverage container 20'. A mould (not showed) surrounds the preform 20 / beverage container 20' during the blow-moulding process, limiting the expansion of the preform by the inner wall of the mould and yielding the final shape of the beverage container 20'. During the blow-mouldings process the wall thickness of the preform 20 is reduced from about 5 mm in the preform 20 to about 1 mm in the beverage container 20'.

Fig. 1c illustrates a vertical sectional view of a blow-moulding and filling system comprising a filling system 10". The designated numerals shown in Fig. 1c refer to the same part as in Fig. 1b, a double prime (") symbol indicating a different embodiment of the same part. The filling system 10" encompasses all of the shown components of the previously shown blow-moulding system 10 and additionally a filling pipe 32. The filling pipe 32 protrudes from inside the filling system 10" through the pressurizing pipe 12 into the container 20". The filling pipe 32 is used to fill the container 20" with a beverage such as beer, wine, soft drink or the like.

During filling, the full weight of the beverage container 20" should essentially be held by the second flange 26. The first flange 24 should preferably not be subjected to any significant force by the holder 14, including frictional forces, thus the holder 14 may preferably be slightly wider than the first flange 24 or have a slight conical shape allowing for the first flange 24 not to touch the holder 14 at any given time. At this stage deformations on the second flange 26 are likely as a result of the large stress on the beverage container 10" due to the incoming beverage and due to the possible weakened state of the beverage container 10" caused by the moulding process generally applied shortly before the filling starts.

Fig. 1d illustrates a vertical sectional view of a capping system 40. The designated numerals shown in Fig. 1d refer to the same part as in Fig. 1a, a triple prime (''') symbol indicating a different embodiment of the same part. The capping system 40 comprises an adapter 44 and a fastening system 46. The adapter 44 has an essentially cylindrical shape enclosing the mouth 22 and having a hollow centre comprising a beverage channel 48. The beverage channel 48 communicates to the mouth 22 of the container by the rim 28. A sealing o-ring 42 enclosing the rim 28 ensures a leakage free communication between the mouth 22 and the beverage channel 48. A cap 52 closes the opposite end of the beverage channel 48. Several cap types may be applied, e.g. screw cap, pull-off cap, pierceable membrane or crown cap. The cap 52 seals the beverage channel 48 towards the outside.

The adapter 44 comprises a fastening member 50 protruding inwards between the first flange 24 and the second flange 26 forming a close fit to the mouth 22. The fastening member 50 locks the container 20"' onto the adapter 44. The fastening member 50 applies a static force onto the first flange 24 in an upward direction in such a way that the rim 28 forms a secure and pressure tight connection onto the pressure tube 12.

A fastening device 46 is used to apply the adapter 44 to the beverage container 20"'. The fastening device 46 surrounds the adapter 44 and bends inwards to make a tight fit onto the mouth 22 below the second flange. The lower wall of the fastening member 50 has a chamfering allowing the adapter to be press-fitted onto the beverage container 20"'. By pushing the fastening device upwards the fastening member 50 will lock into place between the first flange 24 and the second flange 26. The adapter 44 preferably is made of flexible material such as plastics allowing the beverage container 20"' to be attached by press-fitting technology.

Preferably, the fastening device 46 is made in sections. By separating the sections of the fastening device 46 the second flange 26 may be released. Consequently, by moving the sections of the fastening device 46 towards the beverage container 20''' the second flange 26 may be grabbed.

Alternatively, the adapter 44 may have threads allowing the adapter 44 to be screw-fitted onto the beverage container 20"'. Screw fitting is less preferable since it will be more time consuming than press fitting.

Fig. 1e illustrates a capped and sealed beverage container 20"'. The designated numerals shown in Fig. 1e refer to the same part as in Fig. 1d.

Fig. 1f illustrates a dispensing system 40"" comprising an adapter or base plate 44"" for use in a beverage dispensing system such as e.g. a DraughtMaster^{™} system. The designated numerals shown in Fig. 1e refer to the same part as in Fig. 1d, a quadruple prime ("") symbol indicating a different embodiment of the same part. The dispensing system 40"" comprises a base plate 44"" having a specially made shape to fit inside the DraughtMaster^{™}. The base plate 44"" is essentially cylinder symmetric and encircles the mouth 22 of the container 20"". A sealing ring 42 encircles the mouth 22 and ensures a leakage free communication between the mouth 22 of the container 20 and the base plate 44"".

The base plate 44"" comprises a fastening member 50"". The fastening member 50 protrudes inwards from the base plate 44"" towards the mouth 22 making a tight fit to the mouth 22 between the first flange 24 and the second flange 26 thereby locking the container 30 in a fixed position onto the base plate 44'. The base plate 44' comprises a tapping line 48 and a seal 54. The base plate 44"" is fixated to the beverage container 20"" by using the press-fitting technique as described above.

The tapping line 48 is situated in the centre of the base plate 44' and reaches into the container 20"" through the mouth 22. The seal 54 ensures a leakage free communication between the base plate 44' and the tapping line 48.

Alternatively, the beverage container may have a pierceable cap applied to the beverage container mouth directly without an adapter. The pierceable cap is preferably pierced by mounting the beverage container into a beverage dispensing system by a piercing device such as a cannula included in the beverage dispensing system.

Figs. 1g, 1h and 1i illustrate the mouth 22 in three different detailed views. The designated numerals shown in Fig. 1g, 1h and 1i refer to the same part as in Fig. 1 a. The first flange 24 and the second flange 26 have a chamfering on the upwards-facing edge to simplify the press-fitting procedure.
The beverage container may preferably be used for carbonized beverages under pressure such as e.g. draught beer. A high pressure inside the container supports the container structure during transportation reducing the amount of material needed for manufacturing the container.

The beverage container walls may include a barrier layer for confining gases inside and outside the beverage container. Such gases are in particular carbon dioxide inside the container and oxygen outside the container. Carbon dioxide escaping out of the beverage container and oxygen penetrating into the beverage container may deteriorate the beverage quickly.

Additionally, the beverage container walls may be dyed or include an UV light-reflecting layer to avoid UV radiation to deteriorate the beverage.

The beverage container may preferably be disposable and collapsible. The beverage container should preferably be made of a soft and light material being easily collapsible after or during use. After use the collapsed container may be easily disposed in an ecological safe way such as by combustion.

The beverage container may also be reusable. A reusable beverage container should be made of solid and stable materials capable of being re-filled a number of times.

The beverage container may also be made using multiple layers. The advantage of such a multi layer container is the increased safety and added convenience in case of burst of the inner layer. In such a case the outer layer prevents any beverage from leaking to the outside.

The beverage container may either be used together with a light and compact dispensing device or tap achieving the driving pressure e.g. by chemical means, or alternatively in a private or professional dispensing system, such as e.g. a DraughtMaster^{™}, where the driving pressure is provided e.g. by a compressor.

It should be noted that when using a DraughtMaster^{™} or similar dispensing system a sealing in the shape of an o-ring or gasket may be unnecessary due to the high pressure in the dispensing system, provided the first flange and the holder is in good condition. The high pressure will effectively seal the beverage container to the holder and prevent any beverage from leaking.

### Below is a list of the parts and their designated numerals:

- 10: Blow-moulding system (before blow-moulding process)
- 10': Blow-moulding system (after blow-moulding process)
- 10": Filling system
- 12: Pressurizing pipe
- 14: Holder
- 16: Locking member
- 20: Beverage container preform
- 20': Beverage container
- 20": Beverage container (during filling)
- 20"': Beverage container (filled)
- 20"": Beverage container (filled)
- 22: Mouth
- 24: First flange
- 26: Second flange
- 28: Rim
- 30: Preform main body
- 32: Filling pipe
- 40: Capping system
- 40"": Dispensing system
- 42: Sealing o-ring
- 44: Adapter
- 44"": Base plate
- 46: Fastening device
- 48: Beverage pipe
- 48"": Tapping line
- 50: Fastening member according to a first embodiment
- 50"": Fastening member according to a second embodiment
- 52.: Cap
- 54: Seal

## Claims

1. A method of producing a beverage container (20') for containing a carbonized beverage, the method comprising the steps:
- providing a preform (20) having a specific shape encompassing;
- an outer wall defining an elongated body (30) having a first end and a second end, said first end being closed and said second end being open and constituting a mouth (22),
- a first flange (24) encircling said outer wall at said mouth (22) part at a first distance from said mouth (22) end, and
- a second flange (26) encircling said outer wall of said mouth (22) at a second distance from said mouth (22) end, said first flange (24) and said second flange (26) being of substantially identical configuration and defining substantially the same axial height and substantially the same radial extension from said outer wall,
said method further comprising the steps of:
- mounting said preform (20) in a blow-moulding system (10, 10'), fixating said preform (20) relating to said blow-moulding system (10, 10') by means of said second flange (26) without significantly contacting said first flange (24), blow-moulding said preform (20) into said beverage container (20') while maintaining said preform (20) in said blow-moulding system (10, 10') by means of said second flange (26) and preventing mechanically contacting or influencing said first flange (24) and having said first flange (24) for fixating and sealing said beverage container (20') in a beverage dispensing device (40"") , **characterized by**
said first flange (24) being protected during the blow-moulding process from a heat source by a holder (14) which encloses the mouth (22) with a close fit around both the first flange (24) and the second flange (26), thereby ensuring said first flange (24) remaining solid and essentially unaffected by said heat source, said holder (14) preferably being slightly wider than said first flange (24), alternatively having a slight conical shape allowing for said first flange (24) not to touch said holder (14) at any given time to allow for a small air gap between said holder (14) and said first flange (24) insulating said first flange (24) thermally from said holder (14).

2. The method according to claim 1, further comprising the step of filling said beverage container (20') with beverage while mounting said beverage container (20') in a filling system, fixating said beverage container (20') relating to said filling system by means of said second flange (26) without significantly contacting said first flange (24), filling said beverage container (20') while maintaining said beverage container (20') in said filling system by means of said second flange (26) and preventing mechanically contacting or influencing said first flange (24).

3. The method according to claim 1 or 2, further comprising the step of capping said beverage container (20') while mounting said beverage container (20') in a capping system (40), fixating said beverage container (20') relating to said capping system (40) by means of said second flange (26) without significantly contacting said first flange (24), capping said beverage container (20') by sealing off said beverage container (20') at said mouth (22) by means of a sealing membrane, cap or cork while maintaining said beverage container (20') in said filling system by means of said second flange (26) and preventing mechanically contacting or influencing said first flange (24).

4. The method according to any of the preceding claims, wherein said first distance is shorter than said second distance or alternatively said first distance is longer than said second distance.

5. The method according to any of the preceding claims, wherein said first flange (24) and said second flange (26) are spaced apart 2-8 mm, preferably 6 mm, and further said first flange (24) and said second flange (26) protrude 2-10 mm, preferably 8 mm, and further said first flange (24) and said second flange (26) have a thickness of 2-6 mm, preferably 4mm, and/or wherein said preform (20) contains one layer, two layers or multiple layers.

6. The method according to any of the preceding claims, wherein said beverage container (20') is made of disposable material such as thermoplastic, preferably PET and/or wherein said beverage container (20') is collapsible, and/or wherein said beverage container (20') has a capacity of 1-60 litres such as 5-20 litres, preferably 5-10 litres.

7. The method according to any of the preceding claims, wherein the beverage container further comprises one or a plurality of barrier layers, said barrier layers being in particular a light barrier, preferably an UV barrier, and a gas barrier, preferably an oxygen and carbon dioxide barrier.

## Patentansprüche

1. Vorfahren zur Herstellung eines Getränkebehälters (20') zum Enthalten eines karbonisierten Getränktes, wobei das Verfahren die folgende Schritte umfasst:
- Bereitstellen eines Vorformlings (20) mit einer spezifischen Form umfassend;
- eine Außenwand, die einen länglichen Körner (30) definiert, der ein erstes und ein zweites End aufweist, wobei das erste End geschossen ist und der zweite End offen ist und einen Mund (22) bildet,
- einen ersten Flansch (24), der die Außenwand des Mundteils (22) in einem ersten Abstand vom Ende des Mundes (22) umgibt, und
- einen zweiten Flansch (26), der die Außenwand des Mundteils (22) in einem zweiten Abstand vom Ende des Mundes (22) umgibt, wobei der erste Flansch (24) und der zweite Flansch (26) von im Wesentlichen identischer Konfiguration sind und im Wesentlichen die gleiche axiale Höhe und im Wesentlichen die gleicht radiale Dehnung von der Außenrand definierten,
wobei das Verfahren weiterhin die folgendes Schritte umfasst:
- Anbringen des Vorformlings (20) in einem Blasformsystem (10, 10'), Befestigen des Vorformlings (20) bezüglich des Blasformsystems (10, 10') mittels des zweiten Flansches (26) ohne wesentliche Berührung des ersten Flansches (24), Blasformen des Vorformlings (20) in den Getränkebehälter (20') beim Beibehalten des Vorformlings (20) im Blasformsystem (10, 10') mittels des zweiten Flansches (26) und Verhindern der mechanischen Berührung oder Beeinflussung des ersten Flansches (24) und mit einem ersten Flansch (24) zum Befestigen und Versiegeln des Getränkebehälters (20') in einer Getränkeausgabeeinrichtung (40""), **dadurch gekennzeichnet, dass**
der erste Flansch (24) während des Blasformprozesses vor einer Wärmequelle durch einen Halter (14) geschützt wird, der eng anliegend an sowohl dem ersten Flansch (24) als auch dem zweiten Flansch (26) den Mund (22) umgibt, wodurch gesichert wird, dass der erste Flansch (24) fest und Wesentlichen unbeeinflusst durch die Wärmequelle verbleibt, wobei der Halter (14) bevorzugt etwas größer als der erste Flansch (24) ist, alternativ eine leicht konische Form aufweist, was es dem ersten Flansch (24) erlaubt, zu jedem gegebenen Zeitpunkt den Halter (14) nicht zu berühren, um es einem kleinem Luftspalt zwischen dem Halter (14) und dem ersten Flansch (24) zu erlaubten, den ersten Flansch (24) vom Halter (14) thermisch zu isolieren.

2. Verfahren nach Anspruch 1, ferner umfassend den Schritt des Füllens des Getränkebehälters (20') mit Getränkten beim Anbringen des Getränkebehälters (20') in einem Füllsystem, Befestigen des Getränkebehälters (20') bezüglich des Füllsystems mittels des zweiten Flansches (26) ohne wesentliche Berührung des ersten Flansches (24), Füllen des Getränkebehälters (20') beim Beibehalten des Getränkebehälters (20') im Füllsystem mittels des zweiten Flansches (26) und Verhindern der mechanischen Berührung oder Beeinflussung des ersten Flansches (24).

3. Verfahren nach Anspruch 1 oder 2, ferner umfassend den Schritt des Verschließens des Getränkebehälters (20') beim Anbringen des Getränkebehälters (20') in einem Verschließsystem (40), Befestigen des Getränkebehälters (20') bezüglich des Verschtießsystems mittelt des zweiten Flansches (26) ohne wesentliche Berührung des ersten Flansches (24), Verschließen des Getränkebehälters (20') durch Verspiegeln des Getränkebehälters (20') am Mund (22) mittels einer Dichtungsmembrane, eines Deckels oder eines Pfropfens beim Beibehalten des Getränkebehälters (20') im Füllsystem, mittels des zweiten Flansches (26) und Verhindern der mechanischen Berührung oder Beeinflussung des ersten Flansches (24).

4. Verfahren nach einem der vorhergehenden Ansprüche, wobei der erste Abstand kürzer als der zweite Abstand ist oder alternativ der erste Abstand länger als der zweite Abstand ist.

5. Verfahren nach einem der vorhergehenden Ansprüche, wobei der erste Flansch (24) und der zweite Flansch (26) um 2-8 mm, bevorzugt 6 mm, beabstandet sind, und ferner der erste Flansch (24) und der zweite Flansch (26) um 2-10 mm, bevorzugt 8 mm, hervorstehen, und weiterhin der erste Flansch (24) und der zweite Flansch (26) eine Dicke von 2-6 mm, bevorzugt 4 mm, aufweisen, und wobei der Vorformling (20) eine Schicht, zwei Schichten oder mehrere Schichten enthält.

6. Verfahren nach einem der vorhergehenden Ansprüche, wobei der Getränkebehälter (20') aus einem Einwegmaterial, wie zum Beispiel Thermoplast, bevorzugt PET, hergestellt ist, und/oder wobei der Getränkebehälter (20') zusammendrückbar ist, und/oder wobei der Getränkebehälter (20') ein Fassungsvermögen von 1-60 Liter, wie zum Beispiel 5 bis 20 Liter, bevorzugt 5 bit 10 Leiter, hat.

7. Verfahren nach einem der vorhergehenden Ansprüche, wobei der Getränkebehälter ferner eine oder eine Vielzahl von Sperrschichten umfasst, wobei die Sperrschichten inbesondere eine Lichtbarriere, bevorzugt eine UV Barriere, und eine Gasbarriere, bevorzugt eine Sauerstoff- und Karbondioxidbarriere, sind.

## Revendications

1. due production d'un pour boissons (20') pour une carbonisée, le comprenant, les étapes de:
fournir une préformé (20) avant une formé spécifique enveloppant;
une paroi extérieure définissant un corps allonge (30) ayant une première extrémité et une deuxième extrémité, première extrémité étant fermée et ladite deuxième extrémité étant ouverte et constituant une ouverture (22),
une première bride (24) encerclant ladite paroi extérieure à ladite ouverture (22) à une première distance de ladite extrémité de ladite ouverture (22), et
une deuxième bride (26) encordant ladite paroi extérieure de ladite ouverture (22) à une deuxième de ladite extrémité de ladite ouverture (22), ladite première bride (24) et ladite deuxième bride (26) étant d'une configuration substantiellement identique et définissait substantiellement la même hauteur axiale et substantiellement la même extension radiale à partir de ladite paroi extérieure, ledit procédé comprenant en outre les étapes de:
monteur ladite préforme (20) dans un système de moulage par soufflage (10, 10'), fixer ladite préforme (20) relative au système de moulage par soufflage (10, 10') par moyens de ladite deuxième bride (26) sans contact significatif avec ladite première bride (24), moulant ladite préforme (20) par soufflage dans ledit récipient pour boissons (20') lorsque préforme (20) est maintenue dans ledit système de moulage par soufflage (10,10') par moyens de ladite deuxième bride (26) et empêchant le contact ou l'influence mélanique sur ladite première bride (24) et ayant ladite première bride (24) pour fixer et étanchéifier ledit récipient pour boissons (20') un dispositif de distribution de boissons (40""), **caractérisé en ce que**
ladite première bride (24) étant protégée, pendant le processus de moulage par soufflage, d'une source de chaleur par un support (14) qui entoure l'ouverture (22) avec un ajustement juste auteur d'à la fois la première bride (24) et la deuxième bride (26), assurant ainsi que première bride (24) reste solide et essentiellement non affectée par ladite source de chaleur, ledit support (14) étant préférablement légèrement plus large que ladite première bride (24), ayant une formé légèrement conique permettant à ladite première bride (24) de ne pas toucher ledit support (14) a un temps quelconque donné pour permettre un petit espace d'air entre ledit support (14) et ladite première bride (24) isolant ladite première bride (24) thermiquement dudit support (14).

2. Procédé salon la revendication 1, comprenant en outre l'étape de remplir ledit récipient pour boissons (20') avec de la boisson lorsque récipient pour boissons (20') est monté dans un système de remplissage, fixer ledit récipient pour boissons (20') relatif audit système de remplissage par moyens de ladite deuxième bride (26) sans significatif avec ladite première bride (24), remplir ledit récipient pour boissons (20') lorsque récipient pour boissons (20') est maintent dans ledit système de remplissage par moyens de ladite deuxième bride (26) et empêcher le contact ou l'influence mécanique sur ladite première bride (24).

3. Procédé selon les revendications 1 ou 2, comprenait en outre l'étape de système de capsulage dudit récipient pour boissons (20') lors du montagne dudit récipient pour boissons (20') dans un système de capsulage (40), fixer récipient pour boissons (20') relatif audit système de capsulage (40) par moyens de ladite deuxième bride (26) saris contacter de minière significative ladite première bride (24), capsulant ledit récipient pour baissons (20') par le scellement dudit récipient pour boissons (20') à ouverture (22) par moyens d'un enfuit étanche, d'une capsule ou d'un bouchon tout en maintenant ledit récipient pour boissons (20') dans ledit système de remplissage par moyens de ladite deuxième bride (26) et empêcher le contact ou influence mécanique sur ladite première bride (24).

4. Procédé selon l'une quelconque des revendications précédentes, dans lequel ladite première distance est plus courte que ladite deuxième distance ou alternativement, première distance est plus longue que ladite deuxième distance.

5. Procédé selon l'une quelconque des revendications précédentes, dans lequel ladite première bride (24) et ladite deuxième bride (26) soit espacées de 2 à 8 mm l'une de l'autre, de préférence 6 mm, et en outre, ladite première bride (24) et ladite deuxième bride (26) saillit de 2 à 10 mm, de référence 8 mm et en outre, ladite première bride (24) et ladite deuxième bride (26) ont une épaisseur de 2 à 6 mm, de préférence 4 mm, et/ou dans lequel préformé (20) contient une couche, deux couches ou des couches multiples.

6. Procédé selon l'une quelconque des revendications précédentes, dans lequel récipient pour boissons (20') est fait d'une matière jetable que une matière thermoplastique, de préférence du polytéréphtalate d'éthylène et/ou dans lequel ledit récipient pour boissons (20') est compressible, et/ou dans lequel ledit récipient pour boissons (20') a une capacité de 1 à 60 litres, qu'une capacité de 5 à 20 litres, de préférence 5 à 10 litres.

7. Procédé selon l'une quelconque des revendications précédentes, dans lequel le récipient pour comprend en outre une ou plusieurs couches de barrière, lesdites couches de barrière étant en particulier une barrière de lumière, de préférence une barrière UV, et une barrière de gaz, de préférence une barrière d'oxygène et de dioxyde de carbone.
